# EUROPEAN PATENT SPECIFICATION

(11) **EP 1 925 724 B1**
(45) Date of publication and mention of the grant of the patent: **20.01.2010**
(21) Application number: 07120631.2
(22) Date of filing: 14.11.2007
(51) Int. Cl.: D21F 7/02, D21F 3/10, D21F 5/02

(54) **Arrangement for a web-forming machine and a method for operating a rotating piece of a web-forming machine**
Anordnung für eine Bahnherstellungsmaschine und Verfahren zum Betrieb eines rotierenden Elements einer Bahnherstellungsmaschine
Arrangement pour une machine de fabrication d'une bande et procédé de fonctionnement d'une pièce rotative d'une machine de fabrication d'une bande

(30) Priority: 23.11.2006 FI 20065746
(43) Date of publication of application: 28.05.2008
(73) Proprietor: Moventas Oy, 40101 Jyväskylä (FI)
(72) Inventor: Oinonen, Juha, 40250 Jyväskylä (FI)
(74) Representative: Helke, Kimmo Kalervo

(56) References cited:
- WO-A-01/86780
- DE-A1- 4 241 400
- DE-A1- 19 610 959
- US-A- 4 495 712
- US-A1- 2005 248 225

## Description

The present invention relates to arrangement for a web-forming machine, which arrangement includes
- a rotating piece,
- a flow duct fitted to end structures of the rotating piece, for leading a medium to the piece, or removing it from the piece,
- an electric motor for rotating the piece, and
- a power-transmission shaft fitted between the piece and the electric motor.
   In addition, the invention also concerns a method for operating a rotating piece of a web-forming machine according to the preamble of claim 10.

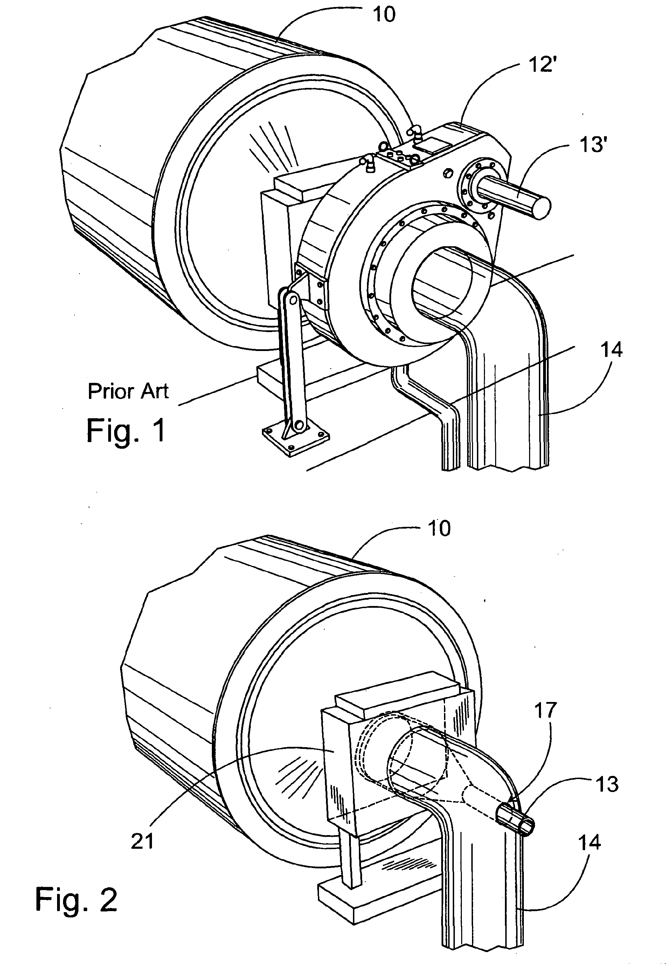

Figure 1 shows one example of the end of a vacuum roll according to the prior art. According to the prior art, the drive of a vacuum roll in an paper machine, for example, the VAC roll 10, is implemented by using, for example, a single-stage spur gear 12'. As such, a construction of this kind is functional, but the spur gear makes the implementation complicated and cost-intensive. In addition, there are drawbacks relating to its ease of maintenance, because in such an arrangement the gear is situated inside the hood. The temperature and humidity conditions inside the hood are truly challenging from the point of view of the gear. A vacuum is created in a VAC roll by means of a medium connection 14 to the end structures of the roll, fitted through the gear 12'.

US patent application publication 2005 / 0248225 A1 discloses a solution, in which all the transmission components are fitted in a compact package in the immediate vicinity of the end of the roll. The solution is compelled to be inside the hood, thus leading to the aforementioned challenges for taking the conditions into account. This solution is characterized by being entirely without gears and the medium connection and power-transmission shaft being formed from the same operational components. The medium connection is a pipe shaft, which is attached to the rotor of an electric motor. A special solution of this kind is also very cost-intensive.

Another prior art is disclosed in US patent publication 4,495,712 which discloses an arrangement according to the preamble of claim 1 and a method according to the preamble of claim 10.

The present invention is intended to create an arrangement for a web-forming machine and a method for operating a rotating piece of a web-forming machine. The characteristic features of the arrangement according to the invention are stated in Claim 1, and those of the method in Claim 10.

In the solution according to the invention, the flow duct arranged in the end structures of the rotating piece is fitted with a feed-through for passage of the power-transmission shaft through the flow duct. The power-transmission shaft arranged to run through the feed-through is fitted directly to the end structures of the rotating piece. Thus possible gear will be at the electric-motor end of the transmission shaft. Correspondingly, the method according to the invention comprises the steps of fitting the flow duct with a feed-through for passage of the power-transmission shaft through the flow duct and fitting the power-transmission shaft directly to the end structures of the rotating piece.

The arrangement is fitted to the drive side of the rotating piece. In addition, in the arrangement the electric motor is outside a hood in which the rotating piece is fitted, and the rotating piece is fitted inside the hood.

The use of the invention achieves the advantages of simplicity and cost-effectiveness. Even though there are more components in the arrangement than in the prior art, it is nevertheless more economical than solutions according to the prior art. For example, compared to a spur gear the transmission shaft - flow duct construction is very simple. In addition, the construction is maintenance-friendly, because, for example, a possible gear need not be located inside the hood. The construction according to the invention can also be easily used when replacing drives and also as a drive solution in slower and narrower machines.

Other characteristic features of the invention will become apparent from the accompanying Claims while more extensive reference is made in the description portion to other advantages achieved by the invention.

The invention, which is in no way restricted by the embodiments described in the following, is examined in greater detail with reference to the accompanying drawings, in which
- Figure 1: shows the arrangement of a roll end according to the prior art,
- Figure 2: shows the solution according to the invention, in a simplified axial view at the end of the roll,
- Figure 3: shows a rough schematic view of one example of the arrangement according to the invention, and
- Figure 4: shows a inset of the arrangement of Figure 1, in connection with the end structures of the roll.

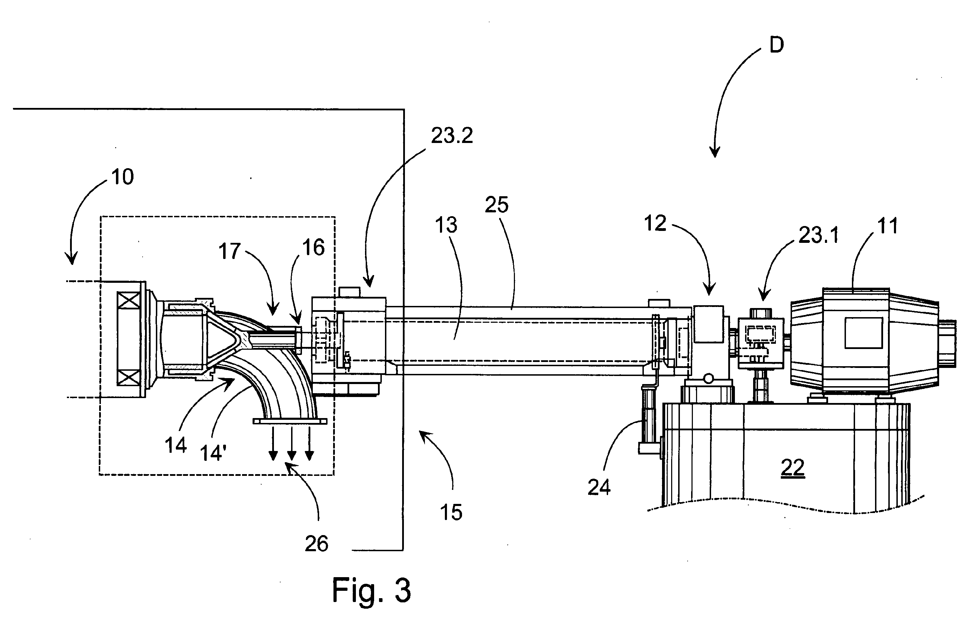

Figures 2 and 3 show one example of an application of an arrangement according to the invention, for operating a rotating piece with a drive, in this case a vacuum roll 10, fitted to a web-forming machine, seen from the drive side D. In this case, the arrangement is entirely on the drive side D of the rotating piece 10. The invention can be applied, for example, to paper machines, board machines, tissue machines, and pulp machines or, more generally, to web-forming machines.

The arrangement according to the invention includes as basic components a flow duct 14, an electric motor 11, and power-transmission means 12, 13. The vacuum roll 10 can be supported from its shaft on bearings in a manner that is, as such, known on bearing brackets 21. Vacuum rolls, more generally hitch rolls, can be, for example, in the drying section of the machine, without, however, in any way excluding other sub-totalities of, or positions in the machine.

A medium connection 14, more generally a flow duct, is fitted to the end of the drive side D of the roll 10. In this case, the medium connection is a pipe, through which a vacuum is created in the vacuum roll 10. It will be obvious to one versed in the art that of course other feed/removal operations than only those relating to the creation of a vacuum can be taken care of through the pipe connection 14. It can generally be said that the flow duct 14 fitted to the end structures 21 of the rotating piece 10 can be used to lead a medium 26 into the rotating piece 10 and/or remove a medium from the piece 10, more generally to create a flow in the medium 26 in a chosen manner, relative to the piece 10. In the case of the vacuum roll 10, the medium 26 can be, for example, air, which is sucked out of the roll 10. In the case of a dryer cylinder, the medium can be, for example, steam, which is fed into the cylinder (not shown). The medium can also be a liquid instead of/as well as gases. The flow duct 14 can also be formed of several parts, which are, for example, joined to each other.

At a distance from the end of the vacuum roll 10 fitted inside the hood 15, there is an electric motor 11 supported on top of a foundation 22. In addition, a possible reduction gear 12 is fitted to the power-transmission shaft 13 at its end next to the electric motor 11. Thus the electric motor 11 and the possible gear 12 are both outside the hood 15, the locations of the wall structures of which relative to the other parts of the arrangement must be understood as being by way of an example. Thus the motor and gear are easily serviced and are also kept away from the challenging conditions in the hood 15. As is known, the conditions of the hood 15, for example in terms of heat and humidity, are characteristic of the drying section and thus differ from the general conditions in the machine hall. In addition, the speed of rotation of the transmission shaft 13 is converted to be suitable for the roll 10 already at the end of the transmission shaft 13 next to the motor 11. This in turn improves safety. The motor 11 is used to rotate the vacuum roll 10 around its central axis. The electric motor 11 can be an asynchronous motor that is, as such known, for example a squirrel-cage motor. A permanent-magnet synchronous motor can also be used. The power class of the motor 11 can be, for example, 30 - 300 kW.

Between the vacuum roll 10 and the electric motor 11 there are power-transmission means. These include at least a power-transmission shaft 13, which can be formed of even several shaft components joined to each other, with a guard casing 25. The shaft 13 shown in Figure 3 has a long part with a guard casing, at which there can be, for example, service bridges. In addition, the column structures of the mill hall may demand a long shaft 13 of the kind shown. In addition, a possible gear 12 may be connected to the transmission shaft 13, but of course the roll 10 can naturally also be driven directly by the motor 11 without an intermediate gear. The shaft 13 with its casings 25 is supported by an arm 24 from the support base 22 of the motor 11. In addition, the power-transmission means can includes one or more as such known clutches, for example HKBR/HK dog clutches with guards 23.1, 23.2, by means of which the components forming the entire power-transmission chain 11 - 13 are connected to each other. The gear 12 can be of some standard type and without special protection, as it is now outside the hood 15.

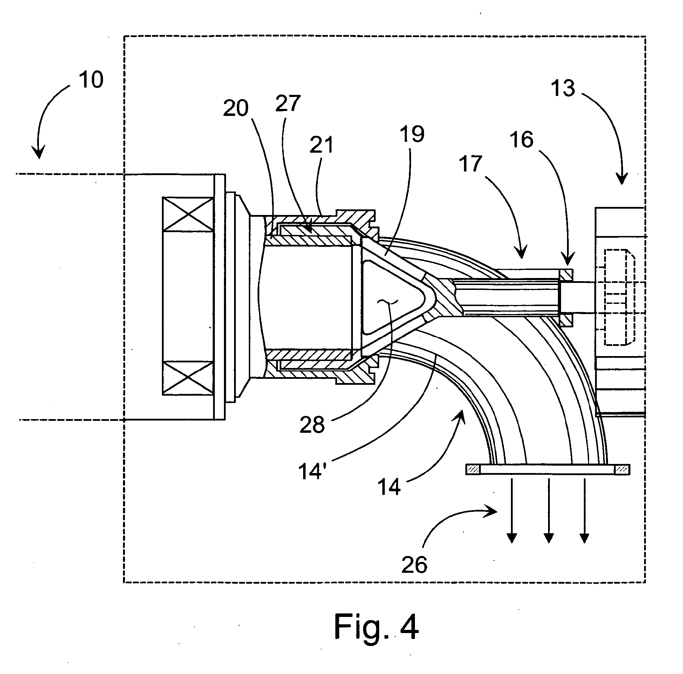

The inset view in Figure 4 shows the solution shown in Figure 3 of the connection of the end of the roll 10 in greater detail. In the solution according to the invention, there is surprisingly a feed-through 17 in the medium connection 14 for the transmission shaft 13 while the transmission shaft 13 is connected directly to the end structures 21 of the vacuum roll 10, to rotate it. Thus there is no gear, for example the spur gear known from the prior art, at all between the end of the transmission shaft 13 inside the hood 15 and the vacuum roll 10. This simplifies the solution and also saves space.

The pipe connection 14 is attached axially to the end structures, in this case to the bearing shell 21, of the roll 10, in a manner that is as such known. It protrudes axially from the bearing shell 21 for a short distance and then immediately curves downwards, for example, to the cellar. Stated more generally, there is a bend in the flow duct 14 at a distance from the end structures 20, 21 of the roll 10. In the case of the vacuum roll 10, the diameter of the pipe connection 14 can be, for example, 100 - 500 mm, more particularly 150 - 400 mm. Correspondingly, the diameter of a dryer cylinder can be clearly smaller. The diameter of the pipe connection 14 can even be close to the diameter of the end of the roll 10. The pipe connection 14 can be attached to the end structures 21 of the roll 10 in a manner that is as such known and equipped with seals (not shown).

Over at least part of its length, the power-transmission shaft 13 is fitted permanently inside the pipe connection 14 fitted to the end structures 21 of the roll 10. In that case, the wall 14' of the pipe connection 14, for example, has a shaft feed-through 17, equipped with a seal arrangement 16 fitted to its downwardly curved bend, for the transmission shaft 13 coming from the electric motor 11. The vacuum seal 16 can be, for example, of a braided seal type and its material can be Teflon, so that it will not interfere with the rotation of the shaft 13. In addition, its wear is minimal and its sealing result is certain. In addition to the seal 16, the feed-through 17 can comprise a support extension, at the end of which is the seal 16, oriented outwards axially from the wall 14' of the pipe connection 14. As it is on the outer edge of the bend, neither the feed-through 17, nor the medium 26 interfere with/affect the operation of each other. A support extension also improves the trouble-freeness.

The end of the power-transmission shaft 13 in the flow duct 14 allows unimpeded passage for the medium 26 arranged to move through the pipe connection 14, for example, air being sucked from a roll 10, or steam being led into a cylinder. Thus there is no substantial restricting effect on the flow of the medium. At the end of the transmission shaft 13, there can be an open adapter piece 19 opening out from the axial basic structure of the shaft 13, for fitting the shaft 13 to the end structures 20, 21 of the vacuum roll 10. According to one embodiment, there can be, for example, a keyway joint 27 between the adapter piece 19 and the end structures 20, 21 of the vacuum roll 10. When considering replacements, for example, a keyed joint 27 has the advantage that there will probably already be a keyway in the flange shaft of the roll 10, to which the shaft 13 can be fitted. Another way of joining can be, for example, a bolted joint. The cross-sectional area of the part of the adapter piece's 19 attached to the drive-side end 20 of the roll 10 can be of the same order of magnitude of the pipe connection 14. Thus the axial part of the adapter piece 19 and the end flange 20 of the roll 10 rotate, while the shell 21 of the carrier bearing of the roll remains stationary.

The conical part of the adapter piece 19 that opens out to the end diameter of the roll 10 can have openings 28, or the conical part can be otherwise of a construction that permits the unimpeded flow of the medium 26 being sucked from the roll 10 and removed through the pipe connection 14.

As can be seen from Figure 3, all the components 11 - 14 of the arrangement are fitted to the drive side D of the vacuum roll 10. Arranging the direct drive 11, 13 and the pipe connection 14 in the same roll end demands special solutions, which the invention successfully resolves.

Besides the arrangement, the invention also relates to a method for operating a rotating piece 10 in a web-forming machine. In it, a medium 26 is led to the piece 10, or removed from the piece 10 through a flow duct 14 with a jacket 14' and, in addition, the drive power rotating the piece 10 is brought and transmitted to the piece 10.

The drive power is transmitted to the rotating piece 10 directly through the jacket 14' of the flow duct 14. According to one embodiment, the drive power is transmitted through the feed-through 17 by the power-transmission shaft 13 connected to the end structures 21 of the piece 10. In addition, a possible gear 12 is supported together with an electric motor 11 on the same foundation 22, more generally the gear 12 is supported together with the motor 11 at the same end 22 of the power-transmission shaft 13, which is the end opposite to that next to the rotating piece 10.

Though the invention is described above largely as an embodiment based on a vacuum roll 10, the arrangement and method can be equally applied, for example, to dryer cylinders, or also to other operating pieces using a medium in a web-forming machine. The invention can also be applied, for example, in felt vacuum rolls, which are also based on the use of a vacuum.

It must be understood that the above description and the related figures are only intended to illustrate the present invention. The invention is thus in no way restricted to only the embodiments disclosed or stated in the Claims, but many different variations and adaptations of the invention, which are possible within the scope of the inventive idea defined in the accompanying Claims, will be obvious to one versed in the art.

## Claims

1. Arrangement for a web-forming machine, which arrangement includes
- a rotating piece (10),
- a flow duct (14) fitted to end structures (21) of the rotating piece (10), for leading a medium (26) to the piece (10), or removing it from the piece (10),
- an electric motor (11) for rotating the piece (10), and
- a power-transmission shaft (13) fitted between the piece (10) and the electric motor (11),
**characterized in that** the flow duct (14) is fitted with a feed-through (17) for passage of the power-transmission shaft (13) through the flow duct (14) and the power-transmission shaft (13) is fitted directly to the end structures (21) of the rotating piece (10).

2. Arrangement according to Claim 1, **characterized in that** the rotating piece (10) is fitted in a hood (15) and the electric motor (11) is outside the hood (15).

3. Arrangement according to Claim 1 or 2, **characterized in that** the end (19) of the power-transmission shaft (13) fitted inside the flow duct (14) is arranged to permit unimpeded passage of the medium (26) arranged to move in the flow duct (14).

4. Arrangement according to Claim 3, **characterized in that** at the end of the power-transmission shaft (13) there is an open adapter piece (19), for fitting the power-transmission shaft (13) to the end structures (20, 21) of the rotating piece (10).

5. Arrangement according to any of Claims 1 - 4, **characterized in that** there is a keyway joint (27) between the adapter piece (19) and the end structures (20, 21) of the rotating piece (10).

6. Arrangement according to any of Claims 1 - 5, **characterized in that** a seal arrangement (16) is fitted to the feed-through (17) for the power-transmission shaft (13).

7. Arrangement according to any of Claims 2 - 7, **characterized in that** a gear (12), which is at the electric motor (11) end of the power-transmission shaft (13) outside the hood (15), is fitted to the power-transmission shaft (13).

8. Arrangement according to any of Claims 1 - 7, **characterized in that** the rotating piece is a hitch roll (10).

9. Arrangement according to any of Claims 1 - 8, in which there is a bend in the flow duct (14) at a distance from the end structures (20, 21) of the rotating piece (10), **characterized in that** the feed-through (17) is in the said bend.

10. Method for operating a rotating piece (10) of a web-forming machine, comprising the steps of
- fitting a flow duct (14) to end structures (21) of the piece (10),
- leading a medium (26) to the piece (10) or removing a medium from the piece (10) through the flow duct (14), and
- producing a drive power for rotating the piece (10) and transmitting the drive power to the piece (10) through a power-transmission shaft (13),
**characterized by** the steps of
- fitting the flow duct (14) with a feed-through (17) for passage of the power-transmission shaft (13) through the flow duct (14) and
- fitting the power-transmission shaft (13) directly to the end structures (21) of the rotating piece (10).

11. Method according to Claim 10, **characterized by** the steps of
- producing the drive power by means of an electric motor (11),
- transmitting the drive power to the rotating piece (10) through the power-transmission shaft (13) and a gear (12) and
- supporting the gear (12) and the electric motor (11) at the same end (22) of the power-transmission shaft (13).

## Patentansprüche

1. Für eine Materialbahn-Herstellungsmaschine bestimmte Anordnung, die
- einen rotierenden Körper (10),
- einen an den Stirnkonstruktionen (21) des rotierenden Körpers (10) angeordneten Strömungskanal (14) zum Zuleiten von Medium (26) in den Körper (10) oder Ableiten von Medium (26) aus dem Körper (10),
- einen Elektromotor (11) zum Rotieren des Körpers (10) und
- eine zwischen dem Körper (10) und dem Elektromotor (11) angeordnete Antriebswelle (13)umfasst,
**dadurch gekennzeichnet, dass** der Strömungskanal (14) eine Durchführung (17) zum Durchführen der Antriebswelle (13) durch den Strömungskanal (14) aufweist und die Antriebswelle (13) direkt an die Stirnkonstruktionen (21) des rotierenden Körpers (10) montiert ist.

2. Anordnung nach Anspruch 1, **dadurch gekennzeichnet, dass** der rotierende Körper (10) unter einer Haube (15) angeordnet ist und der Elektromotor (11) sich außerhalb dieser Haube (15) befindet.

3. Anordnung nach Anspruch 1 oder 2, **dadurch gekennzeichnet, dass** das im Inneren des Strömungskanals (14) befindliche Ende (19) der Antriebswelle (13) so gestaltet ist, dass es das sich im Strömungskanal (14) bewegende besagte Medium (26) ungehindert durchlässt.

4. Anordnung nach Anspruch 3, **dadurch gekennzeichnet, dass** am Ende der Antriebswelle (13) ein offenes Passteil (19) zum Anpassen der Antriebswelle (13) an die Stirnkonstruktionen (20, 21) des rotierenden Körpers (10) angeordnet ist.

5. Anordnung nach irgendeinem der Ansprüche 1 bis 4, **dadurch gekennzeichnet, dass** zwischen dem Passteil (19) und den Stirnkonstruktionen (20, 21) des rotierenden Körpers (10) eine Keilnutverbindung (27) vorhanden ist.

6. Anordnung nach irgendeinem der Ansprüche 1 bis 5, **dadurch gekennzeichnet, dass** an der Durchführung (17) der Antriebswelle (13) eine Dichtungsvorrichtung (16) angeordnet ist.

7. Anordnung nach irgendeinem der Ansprüche 2 bis 7, **dadurch gekennzeichnet, dass** an der Antriebswelle (13) ein Getriebe (12) angeordnet ist, das sich am dem Elektromotor (11) zugewandten Ende der Antriebswelle (13) außerhalb der Haube (15) befindet.

8. Anordnung nach irgendeinem der Ansprüche 1 bis 7, **dadurch gekennzeichnet, dass** der rotierende Körper aus einer Umkehrwalze (10) besteht.

9. Anordnung nach irgendeinem der Ansprüche 1 bis 8, bei der der Strömungskanal (14) in einem Abstand von den Stirnkonstruktionen (20, 21) des rotierenden Körpers (10) ein Kniestück aufweist, **dadurch gekennzeichnet, dass** sich die Durchführung (17) an dem besagten Kniestück befindet.

10. Verfahren zum Antreiben eines rotierenden Körpers (10) in einer Materialbahn-Herstellungsmaschine, das die Stufen:
- Anbringen eines Strömungskanals (14) an den Stirnkonstruktionen (21) des Körpers (10),
- Einleiten von Medium (26) in den Körper (10) oder Ableiten von Medium aus dem Körper (10) über den Strömungskanal (14), und
- Erzeugung von Antriebskraft für den rotierenden Körper (10) und Übertragung der Antriebskraft auf den Körper (10) mittels der Antriebswelle (13) umfasst,
**gekennzeichnet durch** Stufen, in denen
- der mit einer Durchführung (17) versehene Strömungskanal (14) zum Durchführen der Antriebswelle (13) **durch** den Strömungskanal (14) eingerichtet wird, und
- die Antriebswelle (13) unmittelbar an den Stirnkonstruktionen (21) des rotierenden Körpers (10) angebracht wird.

11. Verfahren nach Anspruch 10, **gekennzeichnet durch** Stufen, in denen
- die Antriebskraft mit Hilfe eines Elektromotors (11) erzeugt wird,
- die Antriebskraft über die Antriebswelle (13) und das Getriebe (12) auf den rotierenden Körper (10) übertragen wird, und
- das Getriebe (12) und der Elektromotor (11) beim gleichen Ende (22) der Antriebswelle (13) abgestützt werden.

## Revendications

1. Arrangement pour une machine de formation de feuille continue, lequel arrangement comprend
- une pièce rotative (10)
- un conduit de circulation (14) installé dans les structures d'extrémité (21) de la pièce rotative (10) pour conduire un milieu (26) dans la pièce (10) ou pour le faire sortir de la pièce (10),
- un moteur électrique (11) pour faire tourner la pièce (10) et
- un arbre de transmission (13) disposé entre la pièce (10) et le moteur électrique (11),
**caractérisé en ce que** dans le conduit de circulation (14) il y a une ouverture (17) pour passer l'arbre de transmission (13) à travers le conduit de circulation (14) et que l'arbre de transmission (13) est installé directement dans les structures d'extrémité (21) de la pièce rotative (10).

2. Arrangement selon la revendication 1, **caractérisé en ce que** la pièce rotative (10) est disposée dans une hotte (15) et le moteur électrique (11) est à l'extérieur de la hotte (15).

3. Arrangement selon la revendication 1 ou 2, **caractérisé en ce que** l'extrémité (19) de l'arbre de transmission (13) installée à l'intérieur du conduit de circulation (14) est disposée de sorte à laisser passer sans entrave le milieu (26) disposé à circuler dans le conduit de circulation (14).

4. Arrangement selon la revendication 3, **caractérisé en ce qu'**à l'extrémité de l'arbre de transmission (13) il y a un raccord (19) ouvert pour adapter l'arbre de transmission (13) aux structures d'extrémité (20, 21) de la pièce rotative (10).

5. Arrangement selon l'une quelconque des revendications 1 - 4, **caractérisé en ce qu'**il y a un assemblage par rainure de clavette (27) entre le raccord (19) et les structures d'extrémité (20, 21) de la pièce rotative (10).

6. Arrangement selon l'une quelconque des revendications 1 - 5, **caractérisé en ce qu'**un joint (16) est disposé dans l'ouverture (17) de l'arbre de transmission (13).

7. Arrangement selon l'une quelconque des revendications 2 - 7, **caractérisé en ce qu'**un engrenage (12), qui se situe à l'extérieur de la hotte (15) à l'extrémité du côté moteur électrique (11) de l'arbre de transmission (13), est adapté à l'arbre de transmission (13).

8. Arrangement selon l'une quelconque des revendications 1 - 7, **caractérisé en ce que** la pièce rotative est un rouleau tendeur (10) .

9. Arrangement selon l'une quelconque des revendications 1 - 8, dans lequel il y a un coude dans le conduit de circulation (14) à une certaine distance des structures d'extrémité (20, 21) de la pièce rotative (10), **caractérisé en ce que** l'ouverture (17) est dans ledit coude.

10. Méthode pour actionner une pièce rotative (10) d'une machine de formation de feuille continue, comprenant les étapes où
- l'on adapte le conduit de circulation (14) dans les structures d'extrémité (21) de la pièce (10),
- l'on conduit le milieu (26) dans la pièce (10) ou l'on fait sortir le milieu de la pièce (10) à travers le conduit de circulation (14), et
- l'on produit une puissance d'entraînement pour la pièce rotative (10) et l'on transmet la puissance d'entraînement à la pièce (10) à travers un arbre de transmission (13),
**caractérisée par** les étapes, où
- l'on installe une ouverture (17) dans le conduit de circulation (14) pour faire passer l'arbre de transmission (13) à travers le conduit de circulation (14) et
- l'on adapte l'arbre de transmission (13) directement dans les structures d'extrémité (21) de la pièce rotative (10).

11. Méthode selon la revendication 10, **caractérisée par** les étapes où
- l'on produit la puissance d'entraînement à l'aide d'un moteur électrique (11),
- l'on transmet la puissance d'entraînement à la pièce rotative (10) à travers un arbre de transmission (13) et un engrenage (12), et
- l'on soutient l'engrenage (12) et le moteur électrique (11) à la même extrémité (22) de l'arbre de transmission (13).
